# EUROPÄISCHE PATENTSCHRIFT

(11) **EP 2 901 518 B1**
(45) Veröffentlichungstag und Bekanntmachung des Hinweises auf die Patenterteilung: **29.11.2017**
(21) Anmeldenummer: 13762149.6
(22) Anmeldetag: 16.09.2013
(51) Int. Cl.: H01M 8/0265, H01M 8/0263, H01M 8/1011, H01M 8/1018, H01M 8/18

(54) **MEDIENVERTEILERFELDPLATTE MIT ERHÖHTER, HOMOGENER STROMDICHTEVERTEILUNG FÜR EINE ELEKTROCHEMISCHE ZELLE UND EINE SOLCHE ENTHALTENDE ELEKTROCHEMISCHE ZELLE**
MEDIA DISTRIBUTION MAGNETORESISTOR WITH INCREASED, HOMOGENEOUS CURRENT DENSITY DISTRIBUTION FOR AN ELECTROCHEMICAL CELL AND ELECTROCHEMICAL CELL CONTAINING SUCH A MEDIA DISTRIBUTION MAGNETORESISTOR
MAGNÉTORÉSISTANCE DE DISTRIBUTION DE MILIEU À DISTRIBUTION HOMOGÈNE AUGMENTÉE DE LA DENSITÉ DE COURANT DESTINÉE À UNE CELLULE ÉLECTROCHIMIQUE ET CELLULE ÉLECTROCHIMIQUE CONTENANT UNE TELLE MAGNÉTORÉSISTANCE

(30) Priorität: 26.09.2012 DE 102012109080
(43) Veröffentlichungstag der Anmeldung: 05.08.2015
(73) Patentinhaber: Zentrum für Sonnenenergie- und Wasserstoff-Forschung Baden-Württemberg Gemeinnützige Stiftung, 70565 Stuttgart (DE)
(72) Erfinder: MESSERSCHMIDT, Matthias, 89160 Dornstadt (DE); SCHOLTA, Joachim, 89278 Nersingen (DE)
(74) Vertreter: Ter Meer Steinmeister & Partner
(86) Internationale Anmeldenummer: PCT/EP2013/069152
(87) Internationale Veröffentlichungsnummer: WO 2014/048787

(56) Entgegenhaltungen:
- WO-A2-2005/024985
- DE-A1-102008 017 600
- JP-A- 2005 085 626
- JP-A- 2008 171 608

## Beschreibung

### Gebiet der Erfindung

Die Erfindung betrifft eine Medienverteilerfeldplatte für eine elektrochemische Zelle, wobei in der Verteilerfeldplatte weitgehend parallel verlaufende, durch Stege begrenzte Medienführungskanäle für die fluidförmigen Reaktionsmedien mit einer mäanderförmigen Struktur angeordnet sind. Ferner betrifft die Erfindung eine elektrochemische Zelle, insbesondere eine Brennstoffzelle oder Redox-Flow-Zelle mit einer solchen Medienverteilerfeldplatte auf der Kathodenseite und/oder Anodenseite.

Bei einer solchen Brennstoffzelle kann es sich um eine Polymer-Elektrolyt-Membran (PEM)-Brennstoffzelle, insbesondere um eine für den Betrieb mit flüssigen Brennstoffen, insbesondere zur Umsetzung von Methanol (Direkt-Methanol-Brennstoffzelle, DMFC) handeln.

Bei einer solchen Redox-Flow-Zelle kann es sich um eine mindestens auf einer Seite einen Elektrolyten aus in einem Lösungsmittel gelösten Salzen enthaltende Zelle handeln. Als Lösungsmittel können hierbei sowohl anorganische als auch organische Säuren oder Komplexverbindungen zum Einsatz kommen. Als verwendbare Salze sind zum Beispiel Verbindungen aus Titan, Eisen, Chrom, Vanadium, Cer, Zink, Brom oder Schwefel einsetzbar.

### Hintergrund der Erfindung

Mit Flüssigbrennstoff betriebene Brennstoffzellen verstromen anodenseitig z.B. Methanol (Direkt-Methanol-Brennstoffzelle) oder einen anderen flüssigen Brennstoff. Kathodenseitig wird fast durchgängig Luft als Sauerstoffquelle verwendet.

Der Stofftransport erfolgt in Brennstoffzellen praktisch immer von einem Gas- bzw. Flüssigkeitsverteilerfeld über eine poröse Verteilerstruktur zur Elektrode, an welcher die chemische Umsetzung des Brennstoffs erfolgt. Bei gasförmigen Brennstoffen erfolgt der Transport durch die poröse Struktur mit einem in der Regel geringen Konzentrationsgradienten, so dass an der Elektrode im Regelfall ausreichend hohe Brenngaskonzentrationen vorhanden sind. Bei Flüssigkeiten liegt der Diffusionskoeffizient üblicherweise mindestens eine Größenordnung, meistens jedoch vier Größenordnungen unterhalb desjenigen von gasförmigen Stoffen, so dass bei flüssigen Brennstoffen der innerhalb der porösen Struktur im Normalfall praktisch ausschließlich durch Diffusion erfolgende Stofftransport erheblichen Beschränkungen unterliegt und im Ergebnis eine Begrenzung der Zellleistung bewirkt. Der Betrag des Diffusionskoeffizienten ist bereits so niedrig, dass auch in dieser Umgebung eine Stofftransportbedingte Beschränkung auftritt.

Neben der Erzielung einer hohen und möglichst gleichmäßigen BrennstoffKonzentration an der Elektrode kommt es für eine mit Flüssig-Brennstoff betriebene Zelle auch darauf an, die in der Regel gasförmigen Reaktionsprodukte, z.B. Kohlendioxid, sicher aus der Zelle entfernen zu können.

### Stand der Technik

Bekannt ist, dass die Medienführung zur Erreichung einer ausreichend hohen Geschwindigkeit für einen Austrag gasförmiger Reaktionsprodukte über einzelne Kanäle oder mehrere nebeneinander liegend angeordnete Kanäle mit einer mäanderförmigen Struktur erfolgen kann. Diese kann sich gleichförmig über den aktiven Bereich der Zelle erstrecken oder auch lokale Verzweigungen mit komplexerer Struktur beinhalten. Weiterhin können die nebeneinander liegenden Mäander parallel laufen.

Bekannt ist ebenfalls, dass bei geeigneter Kanalanordnung, wie vergleichbare Kanallängen und vergleichbare Kurvenanzahl der Einzelkanäle, eine gleichförmige Geschwindigkeitsverteilung in den Kanälen erzielt werden kann.

Aus der WO 2005/024985 A2 ist ferner bekannt, dass eine gleichförmige Geschwindigkeitsverteilung durch der Verminderung des Gasquertransports von Reaktionsmedien an den Grenzkanälen des Mäanders dienende, verbreiterte Stege erfolgen kann.

Auch bei einer dergestalt aufgebauten Brennstoffzelle fällt besonders bei hohen Stromdichten von z.B. > 200 mA/cm² so viel CO₂ in der Gasphase an, dass es nicht mehr in der Flüssigphase gelöst werden kann und deshalb ein Abtransport der CO₂-Blasen in der Flüssigphase zwingend erforderlich ist, um eine aus der mindestens teilweisen Verdrängung des flüssigen Brennstoffs resultierende Leistungsminderung und/oder Schädigung der Zelle zu vermeiden.

Nach dem Stand der Technik ist der Abtransport von Gasblasen bei einer hinreichend hohen Druckdifferenz über den betreffenden Kanal immer möglich. Hierbei wird entweder der Brennstoffzellenstapel mit einem niedrigeren Umsatzgrad betrieben, was wiederum zu einem schlechteren Anlagenwirkungsgrad führt, oder die Auslegung der Brennstoffzelle erfolgt auf einen derart hohen Druckabfall über die Zelle, dass auch bei hohen Umsatzgraden und niedrigen Stromdichten ein einwandfreier Austrag von gasförmigen Reaktionsprodukten erfolgt.

Bei der z.B. in DE 100 15 360 A1 beschriebenen Kanalordnung mit Mäanderstruktur nach dem Stand der Technik verlaufen einige Kanäle nebeneinander, deren statischer Druck erheblich voneinander abweicht, da zwischen den aneinanderliegenden Gaskanälen größere Weglängen mit entsprechenden Druckabfällen liegen können. Daraus resultiert eine Querdiffusion über die Gasdiffusionslage, welche zu einer lokalen Anreicherung von Reaktanden und einem teilweisen hydraulischen Kurzschluss bestimmter Kanalteile führt, welcher seinerseits zu einer Verarmung der Reaktanden in anderen Bereichen der aktiven Fläche und einer daraus resultierenden Verminderung der erzielbaren Stromdichte führt.

In Folge muss der entsprechende Brennstoffzellenstapel mit einem niedrigeren Umsatzgrad betrieben werden, was wiederum zu einem schlechteren Anlagenwirkungsgrad führt.

Die DE 103 39 974 beschreibt eine Kanalanordnung, nach der an den Mäandergrenzkanälen Stege mit ansteigender Breite oder mit gleichmäßig erhöhter Breite eingesetzt werden, um den Quertransport von Reaktionsmedien über die Mäandergrenzkanäle auf ein günstiges Maß zu reduzieren.

Eine solche Anordnung weist im Falle einer ansteigenden Mäanderbreite jedoch den Nachteil einer Verschiebung der anoden- und kathodenseitigen Stegverläufe gegeneinander auf, welche zu einer Verminderung des Steg-Überdeckungsgrades der anoden- und kathodenseitig angeordneten Stege führt. Durch diese Verminderung des Überdeckungsgrades wird lokal eine Verminderung der Anpresskraft innerhalb des Brennstoffzellstapels bewirkt, was zu einer Verschlechterung der Elektrodenkontaktierung und damit zu einer Verringerung der Zellspannung führt.

Eine in der DE 103 39 974 ebenfalls beschriebene Anordnung mit gleichmäßig erhöhter Breite der Mäandergrenzstege vermeidet zwar diesen Nachteil, führt jedoch andererseits zu Verarmungszonen im Bereich der Umlenkzonen der Mäandergrenzkanäle, da der verbreiterte Steg bei passender Dimensionierung auf der gegenüberliegenden Seite für die Umlenkzone zu breit dimensioniert ist, was zu einer Reaktandenverarmung unter den Stegbereichen im Bereich der Umlenkzonen der Mäandergrenzkanäle führt.

Ein anderer Ansatz besteht gemäß DE 10 2005 042 498 A1 in der Festlegung eines Noppen-Strömungsfeldes, bei welchem ein strömungs- und schwerkraftgestützter Abtransport des Kondensats in einem gasförmigen Medium erfolgt. Dieses kann auch zur Separation und zum Abtransport gasförmiger Reaktionsprodukte in einem flüssigen Medium eingesetzt werden. Dieser nach dem Stand der Technik gegebene Ansatz erlaubt jedoch keinen lageunabhängigen Betrieb der Brennstoffzelle im Gegensatz zu rein strömungs- und damit druckgetriebenen Austragsmechanismen.

Alle bisher beschriebenen Konzepte führen jedoch zu einer insbesondere bei hohen Stromdichten von z.B. > 200 mA/cm² erniedrigten Brennstoffkonzentration an der Elektrode, da in weit überwiegenden Bereichen der aktiven Fläche (alle Bereiche außer oberhalb der Mäandergrenzstege) nur eine geringe Überströmung zwischen den Stegen oder über den Kanälen stattfindet. Dies kann zwar nach dem Stand der Technik zum Beispiel durch ein Strömungsfeld mit ineinandergreifenden Medienführungskanälen (im Englischen auch "interdigitated flowfield" bezeichnet) aufgrund der Erzwingung einer Durchströmung (konvektiver Transport) des porösen Medienverteilers überwunden werden; eine solche Lösung führt jedoch zur Ansammlung von gasförmigen Reaktionsprodukten und ist daher für die Praxis nicht geeignet.

Mittels des in DE 10 2005 037 093 A1 beschriebenen Medienverteilerfelds, welches eine Kombination eines ineinandergreifenden Medienverteilerfelds mit einer durchgehenden Zu- und Abführung beschreibt, kann zwar ein teilweiser Abtransport der gasförmigen Medien erreicht werden, jedoch ist a) eine geeignete Dimensionierung der verschiedenen Kanalabschnitte kompliziert und aufwändig, sind b) die notwendigen feinen durchgehenden Abführungskanäle schwierig herzustellen, ist c) der ausreichende Abtransport der gasförmigen Reaktionsprodukte nicht gesichert und d) kein lageunabhängiger Betrieb möglich. Weiterhin ist auch bei derartigen Anordnungen insbesondere bei flüssigen Brennstoffen und höheren Stromdichten mit der Herausbildung einer Konzentrationsschichtung in den Kanälen zu rechnen, wie sie zum Beispiel in Scholta et. al., Journal of Power Sources 155 (2006), 66-71 beschrieben ist.

Die WO 03/026053 A1 beschreibt eine Strömungsfeldanordnung, bei der gemäß einer Ausführungsform in den Strömungskanälen keilförmige Stege vorgesehen sind. Ein Gasverteilerfeld mit keilförmigen Stegen auf der Anodenseite ist jedoch darin nachteilig, dass ein verminderter Stegüberdeckungsgrad mit dem Verteilerfeld auf der Kathodenseite resultiert. Aufgrund der außerhalb der Umlenkungsbereiche geraden Kanalstruktur ist weiterhin eine Konzentrationsschichtung in den Kanälen zu erwarten.

Die DE 10 2008 017 600 A1 beschreibt eine Gasverteilerfeldplatte für eine Brennstoffzelle mit mäanderförmigen Gasführungskanälen, wobei die Mäandergrenzstege verbreitert und durch Ausnehmungen oder Ausbuchtungen modifiziert sind. Auch hier ist aufgrund der außerhalb der Umlenkungsbereiche geraden Kanalstruktur eine Konzentrationsschichtung in den Kanälen zu erwarten.

Um diese Konzentrationsschichtungen zu umgehen, ist der Einsatz von Strömungsunterbrechern, wie sie zum Beispiel in der iranischen Patentanmeldung Nr. 012640, Series 82/A (2011) beschrieben ist, möglich. Diese weisen jedoch den Nachteil auf, dass a) ein erhöhter Herstellungsaufwand erforderlich ist und b) der Druckabfall über das Gasverteilerfeld deutlich erhöht wird.

### Aufgabe der Erfindung

Der Erfindung liegt die Aufgabe zugrunde, unter Vermeidung der Nachteile des Standes der Technik eine Medienverteilerfeldplatte für eine elektrochemische Zelle vorzusehen, bei der an der Elektrode sowohl eine hohe und gleichmäßige Konzentrationsverteilung der Reaktionsmedien als auch ein sicherer Abtransport gasförmiger Reaktionsprodukte gewährleistet ist. Dabei soll zur Erzielung einer hohen Reaktandenkonzentration eine Konzentrationsschichtung im Bereich der Medienführungskanäle vermieden werden. Ebenfalls soll die Druckdifferenz über die elektrochemische Zelle möglichst niedrig liegen, um den aus der notwendigen Verdichtungsarbeit resultierenden Hilfsenergiebedarf zu minimieren. Weiterhin soll eine mit einer solchen Medienverteilerfeldplatte ausgerüstete elektrochemische Zelle vorgesehen werden, die nicht nur unter Nennleistung und damit auch einer Nennstromdichte und den damit verbundenen hohen Mediendurchflüssen einwandfrei arbeitet, sondern auch im Teillastbereich mit damit verbundenen niedrigen oder sehr niedrigen Stromdichten.

Mit anderen Worten soll eine Medienverteilerfeldplatte vorgesehen werden, mit einer Anordnung der Medienverteilerkanäle, welche bei einem möglichst niedrigen Druckabfall über die Zelle
a) einen sicheren Austrag von sich bildenden blasen- oder tropfenförmigem Reaktionsprodukten erlaubt,
b) durch Vermeidung der Konzentrationsschichtung in den Kanälen sowie
c) durch lokales Erzwingen eines konvektiven Stofftransports eine hohe Reaktandenkonzentration an der Elektrode erlaubt.

### Zusammenfassung der Erfindung

Die vorstehende Aufgabe wird erfindungsgemäß gelöst durch eine Gasverteilerfeldplatte gemäß Anspruch 1 sowie durch eine elektrochemische Zelle gemäß Anspruch 9. Bevorzugte beziehungsweise besonders zweckmäßige Ausführungsformen des Anmeldungsgegenstandes sind in den Unteransprüchen angegeben.

Gegenstand der Erfindung ist somit eine Medienverteilerfeldplatte für eine elektrochemische Zelle, wobei in der Medienverteilerfeldplatte parallel verlaufende, durch Stege begrenzte Medienführungskanäle für die gasförmigen oder flüssigen Reaktionsmedien mit einer mäanderförmigen Struktur angeordnet sind, wobei an den Mäandergrenzkanälen, welche an Stegen mit entgegengesetzter Strömungsrichtung der Reaktionsmedien vorhanden sind, Mäandergrenzstege vorgesehen sind, die stufenförmig ansteigend verbreitert sind, in der Weise, dass die Stegbreite in den Umlenkungsbereichen der Mäandergrenzkanäle am niedrigsten ist, wobei die Mäandergrenzstege durch 2 - 10 Stufen ansteigend verbreitet sind.

Gegenstand der Erfindung ist weiterhin eine elektrochemische Zelle, nämlich eine Brennstoffzelle oder eine Redox-Flow-Zelle mit einer erfindungsgemäßen Medienverteilerfeldplatte auf der Kathodenseite und/oder Anodenseite.

### Detaillierte Beschreibung der Erfindung

Bei der erfindungsgemäßen Verteilerfeldplatte wird der Quertransport von Reaktionsmedien entlang der Mäandergrenzkanäle durch die Wahl der Stufung der Mäandergrenzstege auf einem geeigneten Niveau gehalten.

Prinzipiell können die Medienführungskanäle zu Kanalgruppen kombiniert werden, welche nur durch Stege von geringer Breite, insbesondere durch Stege mit im Vergleich zur Kanalbreite geringerer Breite voneinander getrennt sind und lediglich an den Mäandergrenzkanälen einen im Vergleich zu den übrigen Stegen stufenförmig verbreiterten Steg aufweisen. Besonders bevorzugt ist jedoch erfindungsgemäß ein serpentinenförmig über das Medienverteilerfeld geführter Kanal, welcher keine Parallelkanäle aufweist und die Stege damit durchgängig Mäandergrenzstege mit einer stufenförmigen Verbreiterung sind.

Ergänzend zum durch DE 10 2008 017 600 A1 gegebenen Stand der Technik wird durch die Wahl einer stufenförmig ansteigenden Stegbreite gemäß vorliegender Erfindung die Erzeugung von nicht nur in Flussrichtung zeigenden Geschwindigkeitsvektoren in der Fluidströmung im Kanal erreicht, und so zusätzlich zum Stand der Technik die Entstehung einer Konzentrations-Schichtung im Kanal verhindert. Dabei erlauben die erfindungsgemäßen Medienverteilerfeldplatten nach wie vor einen hohen Steg-Überdeckungsgrad der anoden- und kathodenseitig angeordneten Stege innerhalb der Medienverteilerfeldplatten, so dass insbesondere der Aufbau von Brennstoffzellen mit hohen brennstoff- und luftseitigen Umsatzgraden und somit einem hohen Wirkungsgrad ermöglicht wird.

Bei einer erfindungsgemäßen Medienverteilerfeldplatte weisen die Mäandergrenzstege in den Umlenkungsbereichen der Mäandergrenzkanäle die niedrigste Breite auf, so dass in diesen Bereichen keine signifikante Reaktandenverarmung unter den Grenzstegen auftritt. Entlang des Mäandergrenzstegs erfolgt eine stufenförmige Verbreiterung des Steges, so dass in den umlenkungsferneren Bereichen des Mäandergrenzstegs eine größere Druckdifferenz zwischen den Nachbarkanälen durch einen entsprechend verbreiterten Steg kompensiert wird. Die resultierende Überströmung entspricht somit dem Brennstoffverzehr über dem Steg und es tritt weder eine unzulässig hohe Überströmung noch eine Reaktandenverarmung über den Stegen auf.

Gemäß einer bevorzugten Ausführungsform sind in der erfindungsgemäßen Medienverteilerfeldplatte ausschließlich Mäandergrenzstege vorgesehen, die stufenförmig ansteigend verbreitert sind, so dass die Stegbreite in den Umlenkungsbereichen der Mäandergrenzkanäle am niedrigsten ist.

### Kurze Beschreibung der Zeichnungen

**Figur 1** ist eine systematische Darstellung einer erfindungsgemäßen Medienverteilerfeldplatte für eine Brennstoffzelle.
**Figur 2** ist ein vergrößerter Ausschnitt der in Figur 1 gezeigten Medienverteilerfeldplatte.
**Figur 3** ist eine systematische Darstellung eines Ausschnitts einer weiteren Ausführungsform einer erfindungsgemäßen Medienverteilerfeldplatte für eine Brennstoffzelle.

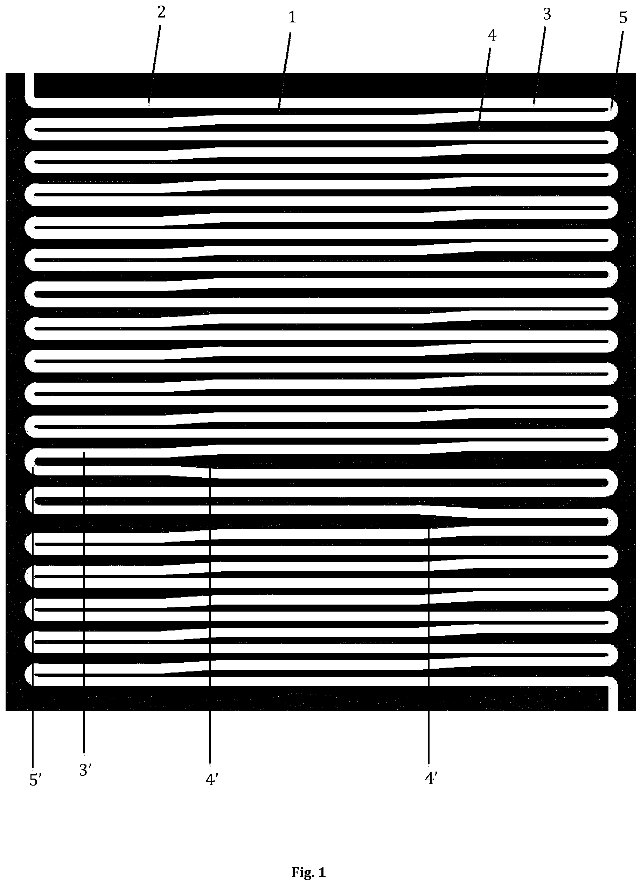

In der in Figur 1 gezeigten Ausführungsform ist ein serpentinenförmig über das Medienverteilerfeld geführter Medienführungskanal 2 gezeigt, welcher keine Parallelkanäle aufweist, so dass die Stege 1 durchgängig Mäandergrenzstege 4,4' mit einer stufenförmigen Verbreiterung sind. Die Mäandergrenzkanäle 3,3' sind an Stegen mit entgegengesetzter Strömungsrichtung der Reaktionsmedien vorhanden. Die stufenförmig ansteigende Verbreiterung der Mäandergrenzstege 4,4' erfolgt in der Weise, dass die Stegbreite in den Umlenkungsbereichen 5,5' der Mäandergrenzkanäle 3,3' am niedrigsten ist. Die Mäandergrenzstege 4 können entweder nur auf einer Seite stufenförmig ansteigend verbreitert sein, oder auch auf beiden Seiten, wie bei 4' gezeigt.

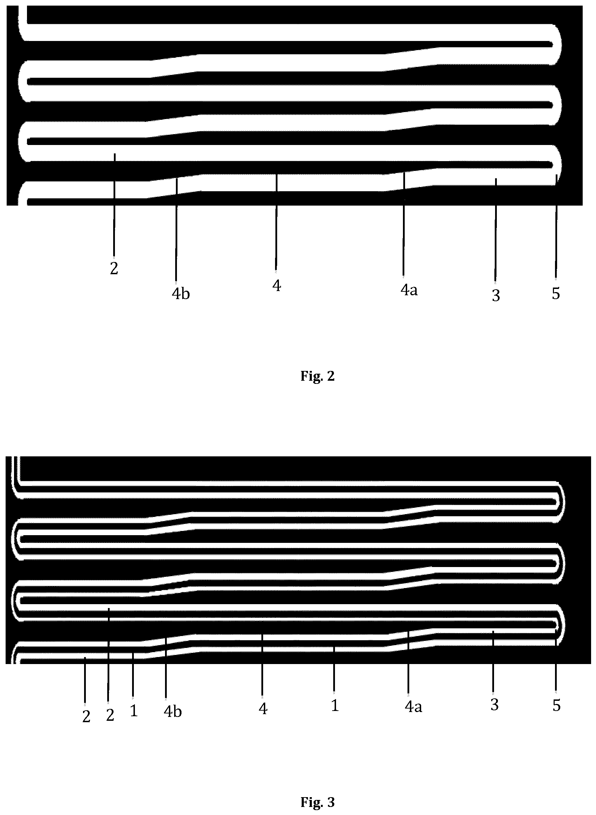

Wie der vergrößerte Ausschnitt gemäß Figur 2 zeigt, ist bei dieser Ausführungsform der Mäandergrenzsteg 4 durch zwei linear ansteigende Stufen 4a und 4b verbreitert, wobei die Stegbreite in den Umlenkungsbereichen 5 der Mäandergrenzkanäle 3 am niedrigsten ist.

Figur 3 zeigt ausschnittsweise eine weitere Ausführungsform einer erfindungsgemäßen Medienverteilerfeldplatte für eine Brennstoffzelle, bei der die Medienführungskanäle 2 zu Kanalgruppen kombiniert sind, die durch Stege ohne Verbreiterung voneinander getrennt sind, und wobei lediglich an den Mäandergrenzkanälen 3 stufenförmig verbreiterte Mäandergrenzstege 4 vorhanden sind. Auch bei der hier gezeigten Ausführungsform ist der Mäandergrenzsteg 4 durch zwei linear ansteigende Stufen 4a und 4b verbreitert in der Weise, dass die Stegbreite in den Umlenkungsbereichen 5 der Mäandergrenzkanäle 3 am niedrigsten ist.

### Bevorzugte Ausführungsformen und Ausführungsbeispiel

Bei einer erfindungsgemäß bevorzugten Direkt-Methanol-Brennstoffzelle (DMFC) mit einer aktiven Fläche von 100 cm² und einer Kantenlänge des Medienverteilerfeldes von jeweils 10 cm wird ein Einzelkanal mit einer Breite und Tiefe von jeweils 0,8 mm mäanderförmig über die aktive Fläche geführt, wobei der Mäandergrenzsteg eine in zwei Stufen nach jeweils einem Drittel der Steglänge ansteigende Verbreiterung von ursprünglich 2 mm im umlenkungsnahen Bereich bis zu 4 mm am entgegengesetzten Stegende aufweist. Die Wahl der Stufenzahl ist dabei nach unten durch das Auftreten zu großer Inhomogenitäten (hohe Überströmung bei schmalen und Rektandenverarmung in den breiten Bereichen) begrenzt. Im Beispielfall wird das Vorhandensein von mindestens einer Stufe pro Steg als erforderlich angesehen. Die Stufenzahl wird nach oben begrenzt durch eine sinnvolle Mindeststufenhöhe, unterhalb derer nur noch eine nicht mehr signifikante Verwirbelung des Fluids im Kanal erfolgt. Im Beispielfall wird das Vorhandensein von höchstens 10 Stufen pro Steg als sinnvoll angesehen. Besonders bevorzugt sind erfindungsgemäß Stufenzahlen zwischen zwei und vier Stufen bezogen auf einen 10 cm langen Umlenkungssteg.

Zur Erzielung eines hohen Stegüberdeckungsgrades wird erfindungsgemäß eine Stufung in einem ganzzahligen Vielfachen der Summe der relevanten Kanal- und Stegbreite der gegenüberliegenden Verteilerplatte besonders bevorzugt, da auf diese Weise ein hoher Stegüberdeckungsgrad erzielbar ist und gleichzeitig die Regionen mit einer mechanisch und elektrisch ungünstigen Anordnung Steg-über-Kanal möglichst gering gehalten werden.

Die Ausformung der Stufen unterliegt keiner besonderen Beschränkung, so lange der Zweck erreicht wird, einen Steg in stufenförmig ansteigenderBreite darzustellen. Insbesondere können die Stufen rechtwinklig, linear ansteigend, sinushalbwellenförmig oder einer anderen mathematischen Funktion folgend mit oder ohne einen geraden Zwischenbereich ausgeführt sein.

Jede der beschriebenen Ausführungsformen bewirkt gegenüber dem durch DE 10 2008 017 600 A1 gegebenen Stand der Technik eine vergleichbare Anpassung der Querströmung über die Mäandergrenzkanäle bei einem erhöhten Überdeckungsgrad zwischen den anoden- und kathodenseitigen Stegen, sowie zusätzlich eine Verwirbelung des Fluidstroms entlang des stegumrandeten Kanals.

Die konkret gewählte Stegbreite wie auch die Art und Kombination der oben beschriebenen Konfigurationen ist abhängig von den Eigenschaften des Brennstoffs (flüssig/gasförmig, Diffusionskoeffizient, Konzentration etc.), der gewählten Gasdiffusionslage wie auch den gewählten Kanalgeometrien. Erfindungsgemäß wirksame Geometrien können sowohl über geeignete Wahl der Bedingungen als auch über die Ermittlung von Leistungskennlinien aufgebauter Brennstoffzellen unter Variation der sich stufenförmig erhöhenden Stegbreite ermittelt werden.

Gemäß dem Ausführungsbeispiel und in der besonders bevorzugten Ausführung umfasst die erfindungsgemäße Kanal-Steg-Anordnung einen Einer-Mäander. Die Erfindung ist jedoch nicht auf diese Anordnung beschränkt, sondern umfasst eine beliebige Anzahl nebeneinander laufender Kanäle mit Stegen geringerer Breite zwischen den gleichlaufenden Kanälen und Stegen mit stufenförmig erhöhter Breite zwischen den Mäandergrenzkanälen.

Weiterhin ist eine Anordnung möglich, in der der Steg auf beiden Seiten einen gestuften Verlauf aufweist, so dass auf beiden Seiten des Steges eine Konvektionsunterstützung in den Kanälen erfolgt. Der Steg kann dabei wie oben beschrieben mit einer stufenförmig ansteigenden oder auch mit einer gleichförmigen Breite versehen sein.

Die erfindungsgemäße Medienverteilerfeldplatte kann weiterhin zusätzliche Merkmale aufweisen, welche den Austrag von Kondensat oder gasförmigen Reaktionsprodukten, wie z.B. Blasen erleichtern, beispielsweise eine Hydrophobierung oder eine Hydrophilierung der Kanal- und/oder Stegoberflächen. Beispielsweise ist es auch möglich, in den Kanälen eine Seite hydrophil und die anderen Seiten hydrophob auszugestalten, wodurch verhindert werden kann, dass die Kanäle von Wassertropfen komplett verschlossen werden und der Austrag von Kondensatwasser somit begünstigt wird.
Ferner kann die mäanderförmige Struktur der Medienführungskanäle in den erfindungsgemäßen Medienverteilerfeldplatten so angeordnet sein, dass eine Strömung der Reaktionsmedien, bezogen auf die Anodenseite einerseits und die Kathodenseite andererseits, in gleicher, gekreuzter oder entgegengesetzter Strömungsrichtung ermöglicht wird.

Der Aufbau und die Komponenten einer erfindungsgemäßen elektrochemischen Zelle, insbesondere einer Brennstoffzelle, entsprechen dem Stand der Technik, mit Ausnahme der erfindungsgemäßen Medienverteilerfeldplatte auf der Kathodenseite und/oder Anodenseite, vorzugsweise sowohl auf der Anoden- als auch auf der Kathodenseite. Bei den verwendeten Gasdiffusionslagen (GDL)-Materialien handelt es sich um die üblicherweise in Polymermembran-, Direktmethanol-, Hochtemperatur-PEM und Phosphorsäure- Brennstoffzellen verwendeten Gasdiffusionslagen. Diese dienen dem Medientransport von und zu den Elektroden sowie der möglichst flächigen Elektrodenkontaktierung. Die Gasdiffusionslagen beeinflussen ebenfalls den Medientransport über den Kanälen und Stegen und damit auch die Dimensionierung der Verteilerfelder. Entsprechend den Gasdiffusionslagen können auch poröse Elektroden von Karbonatschmelzen- oder Festoxid-Brennstoffzellen zur Auslegung von entsprechend der obigen Beschreibung erstellten verbesserten Gasverteilerfeldern verwendet werden.

Insbesondere bevorzugt handelt es sich bei einer erfindungsgemäßen Brennstoffzelle um eine Polymer-Elektrolyt-Membran (PEM)-Brennstoffzelle. Weiterhin bevorzugt handelt es sich um eine PEM-Brennstoffzelle, bei der auf der Anoden- und/oder Kathodenseite ein flüssiges Reaktionsmedium eingesetzt wird. Insbesondere bevorzugt handelt es sich bei der erfindungsgemäßen Brennstoffzelle um eine Direkt-Alkohol-Brennstoffzelle (wobei als Brennstoffe beispielsweise Methanol, Ethanol, Glykol und ähnliche eingesetzt werden können), insbesondere bevorzugt um eine Direkt-Methanol-Brennstoffzelle (DMFC), bei der auf der Anodenseite ein Methanol-Wassergemisch und auf der Kathodenseite Luft bzw. Luftsauerstoff eingesetzt werden.

Gemäß einer weiteren Ausführungsform betrifft die Erfindung eine elektrochemische Zelle in Form einer Redox-Flow-Zelle mit einer erfindungsgemäßen Medienverteilerfeldplatte auf der Anodenseite und/oder Kathodenseite. Der Aufbau und die Komponenten einer solchen Redox-Flow-Zelle entsprechen dem Stand der Technik, mit Ausnahme der erfindungsgemäßen Medienverteilerfeldplatte.

## Patentansprüche

1. Medienverteilerfeldplatte für eine elektrochemische Zelle, wobei in der Medienverteilerfeldplatte parallel verlaufende, durch Stege (1) begrenzte Medienführungskanäle (2) für die fluidförmigen Reaktionsmedien mit einer mäanderförmigen Struktur angeordnet sind, wobei an den Mäandergrenzkanälen (3,3'), welche an Stegen mit entgegengesetzter Strömungsrichtung der Reaktionsmedien vorhanden sind, Mäandergrenzstege (4,4') vorgesehen sind, die stufenförmig ansteigend verbreitert sind, in der Weise, dass die Stegbreite in den Umlenkungsbereichen (5,5') der Mäandergrenzkanäle (3,3') am niedrigsten ist, wobei die Mäandergrenzstege durch 2-10 Stufen ansteigend verbreitert sind.

2. Medienverteilerfeldplatte nach Anspruch 1, wobei die Mäandergrenzstege (4,4') durch 2-4 Stufen ansteigend verbreitert sind.

3. Medienverteilerfeldplatte nach Anspruch 1 und/oder 2, wobei die Stufen rechtwinklig, linear ansteigend oder sinushalbwellenförmig, mit oder ohne einen geraden Zwischenbereich, ausgeführt sind.

4. Medienverteilerfeldplatte nach mindestens einem der Ansprüche 1 bis 3, wobei mehrere Medienführungskanäle (2) zu Kanal gruppen kombiniert sind, welche durch Stege mit im Vergleich zur Kanalbreite geringerer Breite voneinander getrennt sind, wobei lediglich die Mäandergrenzstege stufenförmig ansteigend verbreitert sind.

5. Medienverteilerfeldplatte nach mindestens einem der Ansprüche 1 bis 3, wobei lediglich ein Medienführungskanal (2) ohne Parallelkanäle vorgesehen ist und somit sämtliche Stege Mäandergrenzstege (4,4') mit stufenförmig ansteigender Verbreiterung sind.

6. Medienverteilerfeldplatte nach mindestens einem der vorangehenden Ansprüche, wobei die Mäandergrenzstege (4') auf beiden Seiten im Umlenkungsbereich (5') stufenförmig ansteigend verbreitert sind.

7. Medienverteilerfeldplatte nach mindestens einem der vorangehenden Ansprüche, wobei die Gesamtverbreiterung der Mäandergrenzstege (4,4') 50-250%, der Ausgangsstegbreite beträgt.

8. Medienverteilerfeldplatte nach Anspruch 7, wobei die Gesamtverbreiterung der Mäandergrenzstege (4,4') 75-150 % der Ausgangsstegbreite beträgt.

9. Elektrochemische Zelle, nämlich Brennstoffzelle oder Redox-Flow-Zelle mit einer Medienverteilerfeldplatte gemäß mindestens einem der Ansprüche 1 bis 8 auf der Kathodenseite und/oder Anodenseite.

10. Elektrochemische Zelle nach Anspruch 9, bei der es sich um eine Polymer- Elektrolyt-Membran (PEM)-Brennstoffzelle handelt.

11. Brennstoffzelle nach Anspruch 10, bei der auf der Anoden- und/oder Kathodenseite ein flüssiges Reaktionsmedium eingesetzt wird.

12. Brennstoffzelle nach Anspruch 11, bei der es sich um eine Direkt-Methanol- Brennstoffzelle (DMFC) handelt.

## Claims

1. A media distribution panel plate for an electrochemical cell, wherein media-conducting channels (2) which run in parallel, which are delimited by ribs (1), and which are intended for the fluidic reaction media are arranged with a meandering structure in the media distribution panel plate, wherein meander limit ribs (4, 4') are provided at the meander limit channels (3, 3') which are present at ribs with an opposed flow direction of the reaction media, which meander limit ribs are widened rising in a stepped manner, in such a way that the rib width is smallest in the deflection regions (5, 5') of the meander limit channels (3, 3'), wherein the meander limit ribs are widened by 2-10 steps.

2. The media distribution panel plate according to claim 1, wherein the meander limit ribs (4, 4') are widened rising by 2-4 steps.

3. The media distribution panel plate according to claim 1 and/or 2, wherein the steps are formed rising linearly at right angles or in the form of a sine half wave, with or without a straight intermediate region.

4. The media distribution panel plate according to at least one of claims 1 to 3, wherein a plurality of media-conducting channels (2) are combined to form channel groups, which are separated from one another by ribs having a smaller width compared to the channel width, wherein merely the meander limit ribs are widened rising in a stepped manner.

5. The media distribution panel plate according to at least one of claims 1 to 3, wherein merely one media-conducting channel (2) is provided without parallel channels and therefore all ribs are meander limit ribs (4, 4') with a widening rising in a stepped manner.

6. The media distribution panel plate according to at least one of the preceding claims, wherein the meander limit ribs (4') are widened rising in a stepped manner on both sides in the deflection region (5').

7. The media distribution panel plate according to at least one of the preceding claims, wherein the total widening of the meander limit ribs (4, 4') is 50-250% of the starting rib width.

8. The media distribution panel plate according to claim 7, wherein the total widening of the meander limit ribs (4, 4') is 75-150% of the starting rib width.

9. An electrochemical cell, specifically a fuel cell or redox-flow cell, with a media distribution panel plate according to at least one of claims 1 to 8 on the cathode side and/or anode side.

10. The electrochemical cell according to claim 9, wherein said cell is a polymer electrolyte membrane (PEM) fuel cell.

11. A fuel cell according to claim 10, wherein a liquid reaction medium is used on the anode side and/or cathode side.

12. The fuel cell according to claim 11, wherein said fuel cell is a direct methanol fuel cell (DMFC).

## Revendications

1. Plaque de champ de répartition de milieux pour une cellule électrochimique, dans laquelle sont disposés, dans la plaque de champ de répartition de milieux, des canaux de guidage de milieux (2) s'étendant parallèlement et limités par des entretoises (1) pour les milieux de réaction de type fluide, ayant une structure en méandres, dans laquelle, au canaux de limite de méandres (3, 3'), qui sont disposés à des entretoises avec un sens d'écoulement opposé de milieux de réaction, des entretoises de limite de méandre (4, 4') sont prévus, qui sont élargies en augmentation par étapes, de telle sorte que la largeur de l'entretoise est la plus faible dans les zones de déviation (5, 5") des canaux de limite de méandres (3, 3'), les entretoises de limite de méandre (4, 4') étant élargies en augmentant de 2 à 10 niveaux.

2. Plaque de champ de répartition de milieux selon la revendication 1, dans laquelle les entretoises de limite de méandre (4, 4') sont élargies en augmentant de 2 à 4 niveaux.

3. Plaque de champ de répartition de milieux selon la revendication 1 et / ou 2, dans laquelle les niveaux sont réalisés de manière orthogonale, linéaire en augmentant ou en forme de demi-onde sinusoïdale, avec ou sans une partie intermédiaire rectilinéaire.

4. Plaque de champ de répartition de milieux selon au moins l'une des revendications 1 à 3, dans laquelle une pluralité de canaux de guidage de milieux (2) sont combinés en groupes de canaux, qui sont séparés par des entretoises ayant une moindre largeur par rapport à la largeur du canal, avec seulement les entretoises de limite de méandre ayant un élargissement augmentant en niveaux.

5. Plaque de champ de répartition de milieux selon l'une quelconque des revendications 1 à 3, dans laquelle un seul canal de guidage de milieux (2) est prévu sans canaux parallèles, et donc toutes les entretoises de limite de méandre (4, 4') ayant un élargissement augmentant en niveaux.

6. Plaque de champ de répartition de milieux selon au moins l'une des revendications précédentes, dans laquelle les entretoises de limite de méandre (4') sont de plus en plus élargi en niveaux sur les deux côtés de la zone de déviation (5').

7. Plaque de champ de répartition de milieux selon au moins l'une des revendications précédentes, dans laquelle l'élargissement total des entretoises de limite de méandre (4, 4') est de 50 à 250%, de la largeur d'entretoise initiale.

8. Plaque de champ de répartition de milieux selon la revendication 7, dans laquelle l'élargissement total des entretoises de limite de méandre (4, 4') est de 75 à 150%, de la largeur d'entretoise initiale.

9. Cellule électrochimique, en particulier pile à combustible ou pile redox à écoulement comprenant une plaque de champ de répartition de milieux selon l'une quelconque des revendications 1 à 8 du côté de la cathode et / ou du côté de l'anode.

10. Cellule électrochimique selon la revendication 9, qui est une pile à combustible du type à membrane en polymère et électrolyte (PEM).

11. La pile à combustible selon la revendication 10, dans laquelle un milieu de réaction liquide est utilisé sur le côté de la cathode et / ou sur le côté de l'anode.

12. La pile à combustible selon la revendication 11, qui est une pile à combustible du type à méthanol direct (DMFC).
